# EUROPEAN PATENT SPECIFICATION

(11) **EP 4 627 662 B1**
(45) Date of publication and mention of the grant of the patent: **05.08.2026**
(21) Application number: 23817527.7
(22) Date of filing: 27.11.2023
(51) Int. Cl.: H01M 50/242, H01M 50/291, H01M 50/293, B33Y 80/00, B33Y 10/00

(54) **PLANAR WEB AND BATTERY MODULE INCLUDING SAME**
PLANARES NETZ UND BATTERIEMODUL DAMIT
BANDE PLANE ET MODULE DE BATTERIE LA COMPRENANT

(30) Priority: 02.12.2022 US 202263385782 P
(43) Date of publication of application: 08.10.2025
(73) Proprietor: 3M Innovative Properties Company, Saint Paul, Minnesota 55133-3427 (US)
(72) Inventor: AKARAPU, Sreekanth, Saint Paul, Minnesota 55133-3427 (US); HA, Heonjoo, Saint Paul, Minnesota 55133-3427 (US); KOPECKY, William J., Saint Paul, Minnesota 55133-3427 (US); KOSTER, Brian L., Saint Paul, Minnesota 55133-3427 (US); PICHA, Kyle C., Saint Paul, Minnesota 55133-3427 (US); WU, Tianyu, Saint Paul, Minnesota 55133-3427 (US); GRIES, David A., Saint Paul, Minnesota 55133-3427 (US); AUSEN, Ronald W., Saint Paul, Minnesota 55133-3427 (US)
(74) Representative: Mathys & Squire
(86) International application number: PCT/IB2023/061931
(87) International publication number: WO 2024/116054

(56) References cited:
- WO-A1-2021/250478
- WO-A1-2022/024085

## Description

### FIELD

The present description relates to planar webs that may be used for cushioning in battery modules.

WO 2021/250478 discloses a continuous web comprising an array of discrete hollow polymeric tubes, each tube having a cross-section with a non-circular shape, wherein adjacent polymeric tubes are connected at bond regions.

### SUMMARY

The present invention relates to a planar web, as defined in claim 1. Particular embodiments are defined in the dependent claims.

The present invention further relates to a battery module as defined in claim 11.

In some aspects, the present description provides a planar web including a plurality of hollow tubes. Each hollow tube has an octagonal cross section including eight walls. The eight walls include a first surface wall and a second surface wall where each surface wall has a length A; two side walls perpendicular to the surface walls, each side wall having a length B; and four connecting walls. Adjacent side walls of adjacent hollow tubes are bonded together to form the planar web having a first planar surface comprising the first surface walls and a second planar surface comprising the second surface walls. Each connecting wall independently connects one of the surface walls to one of the side walls such that an interior angle between the one of the surface walls and the connecting wall is X. Each wall has a thickness T and each hollow tube has a height H measured from the first surface wall to the second surface wall. In some embodiments, B/A is at least 0.2 and no greater than 1; T/H is at least 0.02 and no greater than 0.25; and X is at least 100 degrees and no greater than 140 degrees.

In some embodiments, the planar web comprises a single layer of the hollow tubes comprising the first and second planar surfaces. In some embodiments, for the single layer of the hollow tubes, a compressive stress at 20 percent compression is at least 300 kPa and a compressive stress at 60 percent compression is no greater than 3 times the compressive stress at 20 percent compression.

In some aspects, the present description provides a battery module including at least one battery cell; and at least one planar web of the present description disposed along a surface of the at least one battery cell.

These and other aspects will be apparent from the following detailed description. In no event, however, should this brief summary be construed to limit the claimable subject matter.

### BRIEF DESCRIPTION OF THE DRAWINGS

FIG. 1 is a schematic cross-sectional view of a planar web, according to some embodiments.
FIG. 2 is a schematic plot of compressive stress on a single layer of hollow tubes versus percent compression of the single layer of the hollow tubes, according to some embodiments.
FIG. 3 is a schematic side view of a battery module, according to some embodiments.
FIGS. 4 to 10 are plots of compressive stress versus compressive strain for various planar webs and compressible materials.
FIG. 11 is a plot of compressive stress versus compressive strain for planar webs with various interior angles of hollow octagonal tubes of the planar webs, according to some embodiments.
FIG. 12 is a plot of initial compressive strain along a stress-strain plateau and span of the plateau as a function of the interior angle of hollow octagonal tubes of planar web, according to some embodiments.
FIG. 13 is a plot of compressive stress versus compressive strain for various planar webs with various interior angles of hollow octagonal tubes and various ratios wall thickness T to height H of planar webs, according to some embodiments.
FIG. 14 is a plot of initial compressive strain along a stress-strain plateau and span of the plateau as a function of the ratio of wall thickness T to height H of planar webs, according to some embodiments.
FIG. 15 is a plot of compressive stress versus compressive strain for various planar webs, according to some embodiments.
FIG. 16 is a plot of compressive stress for planar webs normalized by Young's Modulus E versus T/H, according to some embodiments.

### DETAILED DESCRIPTION

To improve the range and efficiency of electric vehicle, the current industry trend is to increase battery pack-level energy density through consolidated cell formats and higher energy-density lithium battery cell chemistries. Maintaining battery cell pressure and pressure uniformity for pouch and prismatic cells during the volume change of charge-discharge cycles is desired for battery life and failure mode avoidance. Foams have been used in past attempts to provide the desired pressure profiles.

Longer-term, there is a general trend toward all solid-state battery cells, which have even higher energy density (e.g., 500 Wh/kg) than conventional lithium (Li) ion batteries and are safer. However, stack pressure uniformity beyond what conventional foam materials can provide is desired for maintaining the integrity of the Li-solid-state electrolyte interfaces for low contact resistance during cell cycling. This presents a significant challenge to the successful implementation of long-life solid-state battery cells in electric vehicles.

As a result, there is a need for cushioning materials that provide an expanded Compression Force Deflection (CFD) plateau, where the force (stress) that the cushioning material exerts on the battery cell is relatively uniform over a wide range of compression levels (strain) for the expected 10-year life of the battery. For example, a CFD plateau stress of at least 0.3 MPa (e.g., 0.3 to 5 MPa) may be desired in solid state battery cells to maintain contact between the solid electrolyte and electrodes. A CFD plateau stress of at least 0.4 MPa, 0.5 MPa, 0.8 MPa, or 1 MPa may be desired for some solid-state battery cells. In addition, there is a desire for a CFD plateau range of extending at least from 20 to 60% strain to improve reliability and give a larger working range. A CFD plateau can have a stress that varies somewhat with compression, but the variation with compression is at a substantially lower rate than that of regions of the stress-compression curve on each side of the CFD plateau.

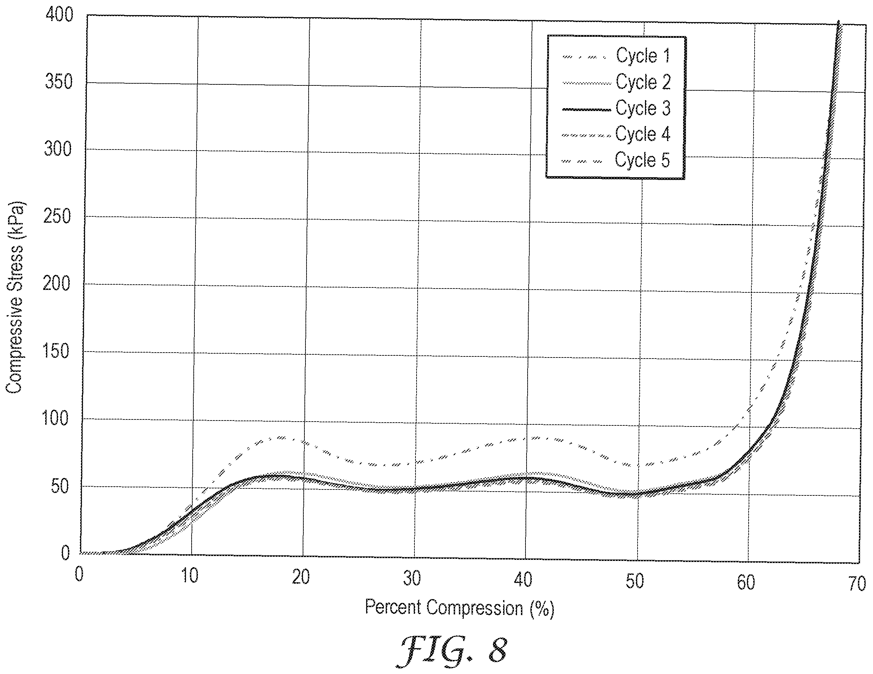

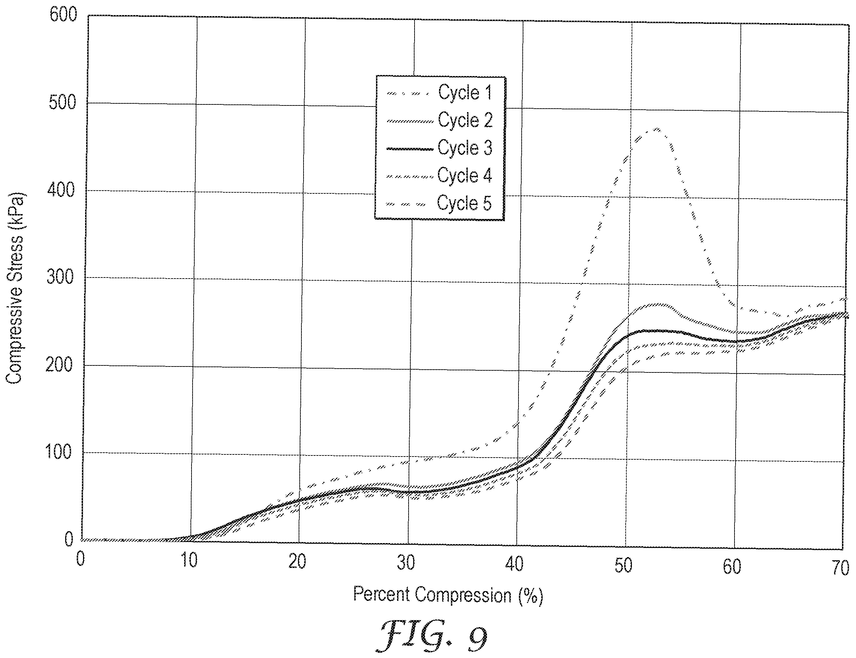

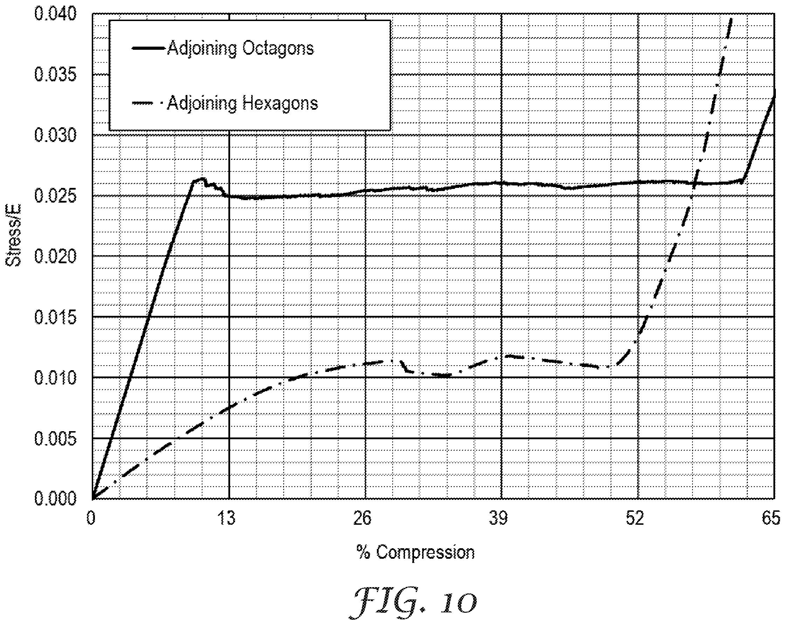

It has been found that a planar web of hollow octagonal tubes joined along sidewalls of the octagonal shapes can provide a desired CFD plateau stress and plateau width or span, while hexagons and other shapes joined along the sides of the shapes result in a lower CFD plateau stress and/or a narrower plateau (see, e.g., FIG. 10). Other shapes such as squircles (see, e.g., Int. Pat. Appl. Pub. No. WO 2021/250478 (Ausen et al.)) have been found to result in the compression stress varying substantially over the compression region where a plateau is desired (see, e.g., FIG. 9) and, further, that the compression stress drops with each compression cycle (see, e.g., FIG. 9). It is typically desired that after the first cycle (which can entail a higher compressive stress in the CFD curve due to stresses retained in the web from manufacturing), the CFD curve be stable with subsequent cycles as shown in FIG. 8, for example, for a web of hollow octagonal tubes.

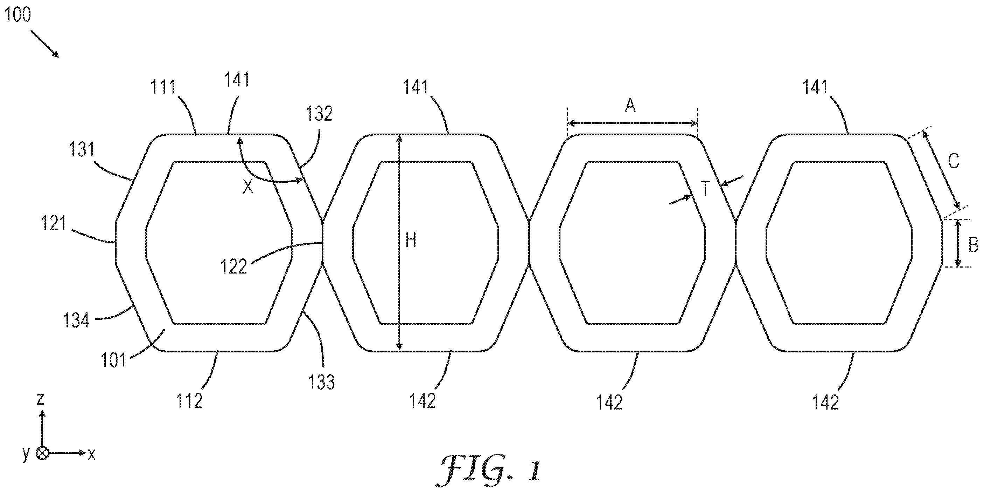

FIG. 1 is a schematic cross-sectional view of a planar web 100, according to some embodiments. The planar web 100 incudes a plurality of hollow tubes 101 where each hollow tube has an octagonal cross section including eight walls. The eight walls include a first surface wall 111 and a second surface wall 112 where each surface wall has a length A, two side walls 121 and 122 perpendicular to the surface walls where each side wall has a length B, and four connecting walls 131, 132, 133 and 134, where each connecting wall independently connects one of the surface walls to one of the side walls such that the interior angle between the one of the surface walls and the connecting wall is X. Adjacent side walls 122 of adjacent hollow tubes are bonded together to form the planar web 100 having a first planar surface 141 comprising the first surface walls 111 and a second planar surface 142 comprising the second surface walls 142. The planar web 100 can extend along orthogonal first and second directions (e.g., x- and y-directions) and can have a height H along a thickness direction (z-direction) orthogonal to the first and second directions. The first and second planar surfaces 141 and 142 can each be parallel to a plane (x-y plane) defined by the first and second directions. In some embodiments, the planar web 100 extends substantially uniformly along a length (along the y-direction) of the planar web 100 so that each cross-section orthogonal to the length (cross-sections parallel to the x-z plane) has a substantially same geometry (e.g., the same up to ordinary manufacturing variations). For example, the planar web 100 can be formed by extrusion along the length direction (y-direction). In some embodiments, the plurality of hollow tubes 101 include at least 3, 4, 5, 8, 10, or 15 of the hollow tubes 101.

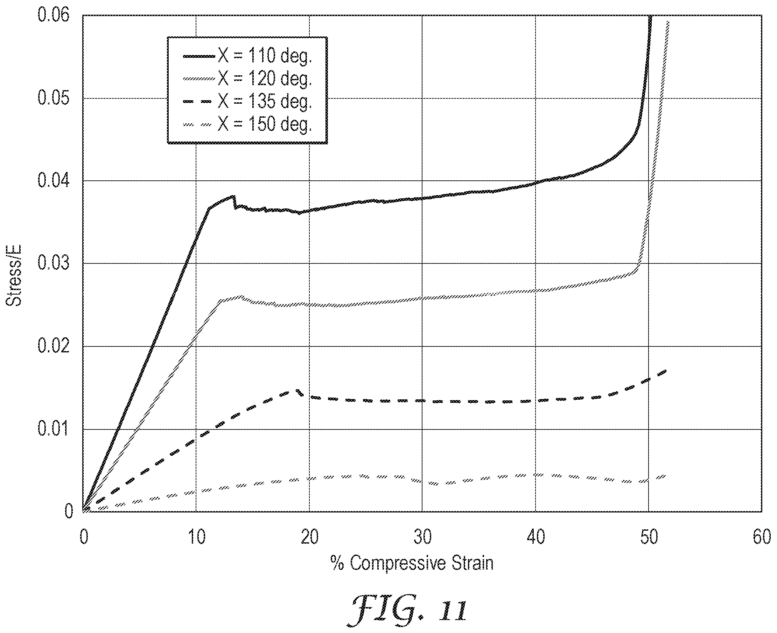

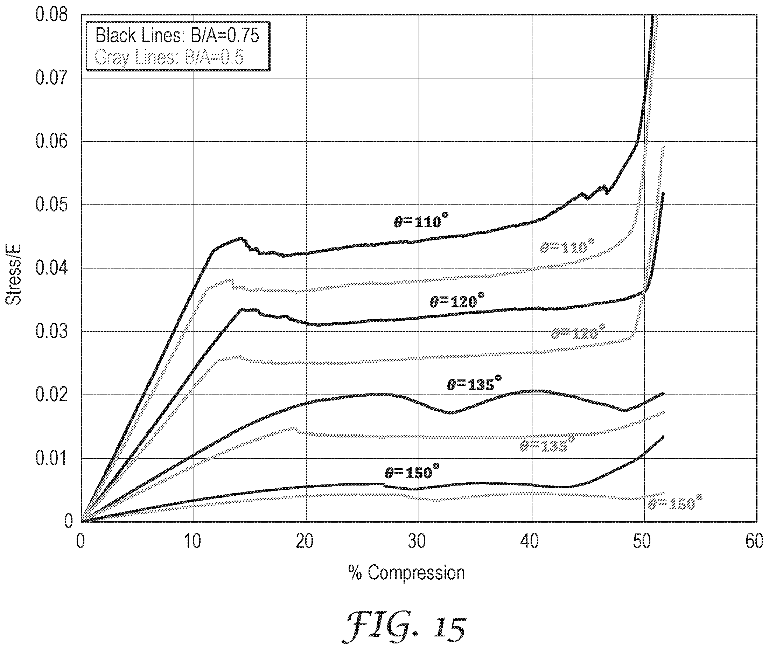

It has been found that when X is greater than 140 degrees, the CFD plateau can be at lower than desired compressive stresses and that when X is less than 100 degrees, the CFD plateau can be shorter (e.g., due to a region of the CFD curve with rapidly increasing stress shifting to lower strain) than desired (see, e.g., FIGS. 11 and 15). In some embodiments, X is at least 100, 105, 108, or 110 degrees. In some embodiments, X is no greater than 140, 135, 130 or 125 degrees. For example, in some embodiments, X is at least 100 degrees and no greater than 140 degrees, or at least 105 degrees and no greater than 130 degrees, or at least 108 degrees and no greater than 125 degrees.

It is typically desired that B/A be sufficiently large (e.g., B/A ≥ 0.2) for desired mechanical stability. For example, the octagon shapes can be bonded to one another only along the side walls so that a sufficient length of the side walls is needed for the bonding area to be sufficient to provide the desired mechanical stability. It has been found that a desired CFD plateau can be obtained when B/A is no greater than 1. However, if B/A is greater than 1, the buckling mechanism can change resulting in a shorter CFD plateau, for example. In some embodiments, B/A is at least 0.2, 0.3, or 0.4. In some embodiments, B/A is no greater than 1, 0.9, or 0.8. For example, in some embodiments, B/A is at least 0.2 and no greater than 1, or at least 0.4 and no greater than 0.8. In some embodiments, A is at least 1, 2, 3, or 4 mm. In some embodiments, A is no greater than 15, 12, or 10 mm. For example, in some embodiments, A is in a range of 1 to 15 mm or 2 to 12 mm. In some embodiments, B is at least 0.4, 0.7, 1, 1.2, or 1.5 mm. In some embodiments, B is no greater than 6, 5, 4, or 3 mm. For example, in some embodiments, B is in a range of 0.4 to 6 mm or 0.7 to 5 mm, or 1 to 4 mm.

Each of the four connecting walls 131, 132, 133 and 134 can have a length C. In some embodiments, C/A is at least 0.8 and no greater than 1.2, or at least 0.9 and no greater than 1.1, or at least 0.95 and no greater than 1.05. In some embodiments, C/A is 1 or about 1. It has been found, according to some embodiments, that a C/A of 1 or about 1 can contribute to achieving a desired CFD plateau stress and width.

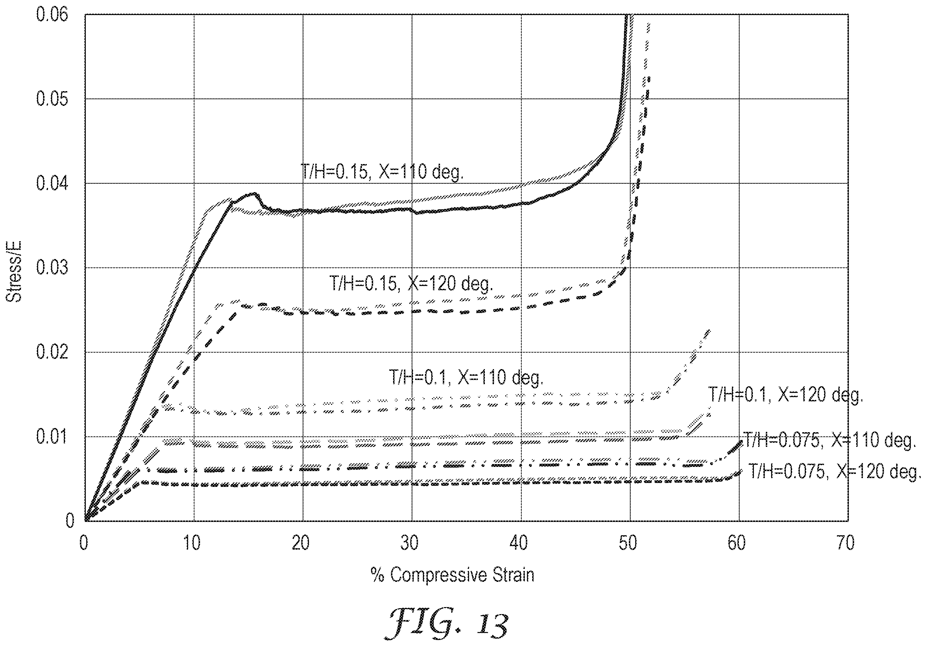

Each wall has a thickness T and each hollow tube has a height H measured from the first surface wall 111 to the second surface wall 112. Dimensions are measured from outer surfaces, unless indicated differently. It has been found, according to some embodiments, that a T/H of at least 0.02 can result in a useful CFD plateau stress and that a T/H of no greater than 0.25 can result in a useful CDF plateau width. In some embodiments, T/H is at least 0.02, 0.04, 0.06, 0.08 or 0.1. In some embodiments, T/H is no greater than 0.25, 0.2, 0.18, or 0.16. For example, in some embodiments, T/H is at least 0.04 and no greater than 0.25, or at least 0.08 and no greater than 0.2, or at least 0.1 and no greater than 0.18. Increasing T/H in these ranges can result increase the stress along the CFD plateau while decreasing T/H can result in increasing the width of the CFD plateau (see, e.g., FIGS. 13-14). In some embodiments, H/A is at least 1.2, 1.5, 1.7, or 2. In some embodiments, H/A is no greater than 3.5. 3.25, 3, or 2.75. For example, in some embodiments, H/A is at least 1.5 and no greater than 3.25, or at least 1.7 and no greater than 3, or at least 2 and no greater than 2.75. In some embodiments, H is at least 1, 2, 3, 4, 5, 6 or 7 mm. In some embodiments, H is no greater than 25, 20, or 15 mm. For example, in some embodiments, H is in a range of 2 to 25 mm, or 3 to 20 mm, or 4 to 15 mm. In some embodiments, B is at least T and no greater than H/2. B/T can be at least 1.2 or 1.5, for example. B/H can be no greater than 0.4, 0.3, or 0.2, for example.

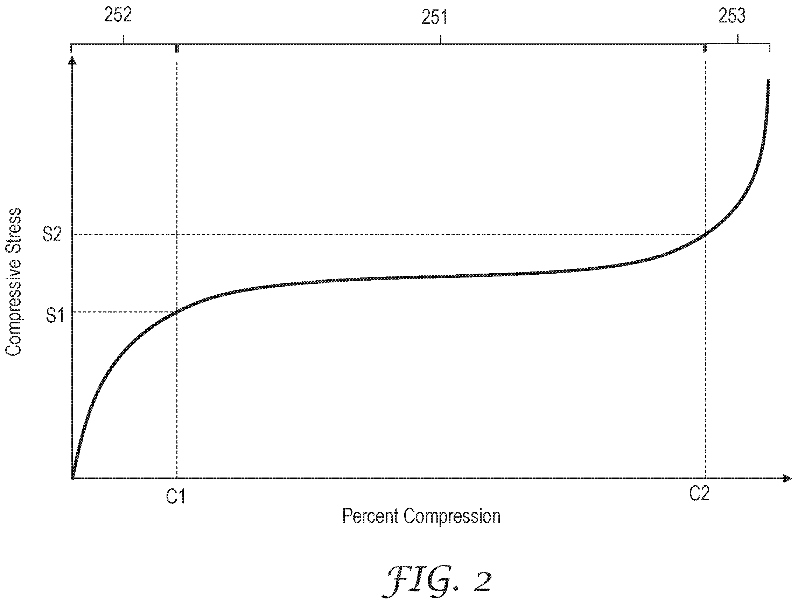

FIG. 2 is a schematic plot of compressive stress on a single layer of the hollow tubes versus percent compression of the single layer of the hollow tubes, according to some embodiments. The plot includes first portion 251 extending from a percent compression (or compressive strain) of C1 (e.g., 20 percent compression or less) to a percent compression of C2 (e.g., 60 percent compression or more). The plot can also include second and third portions 252 and 253 where the first portion 251 is disposed between the second and third portions 252 and 253. In some embodiments, the compressive stress varies with percent compression more slowly in the first portion 251 than in each of the second and third portions 252 and 253. The first portion 251 may be referred to as a plateau portion or a CFD plateau. The compressive stress S1 at the percent compression C1 can be at least 100, 200, 300, 400, 500, 800, or 1000 kPA, for example. The compressive stress S2 at the percent compression C2 can be at least 0.8 times S1 and no more than 3, 2.5, 2, or 1.8 times S1. In some embodiments, S2 is at least S1 or at least 1.2 times S1. In some embodiments, S2 is no greater than 7, 5, 3, or 2 MPa.

The compressive stress versus percent compression can be determined, for example, according to the ASTM D3574-17 test standard or according to the modified ASTM D3574-17 test method described in the Examples. Multiple compression cycles can be carried out and compression data from the third compression cycle can be utilized in order remove or minimize Mullin's effect. The compressive stress of FIG. 2, for example, can be for a third compression cycle. In some embodiments, the compressive stress is substantially unchanged from the second or third compression cycle with subsequent compression cycles.

In some embodiments, adjacent side walls of adjacent hollow tubes are bonded together to form the planar web 100 comprising a single layer of the hollow tubes having a first planar surface 141 comprising the first surface walls 111 and an opposite second planar surface 142 comprising the second surface walls 112. In some embodiments, for the single layer of the hollow tubes, a compressive stress (e.g., S1) at 20 percent compression (e.g., C1) is at least 300 kPa and a compressive stress (e.g., S2) at 60 percent compression (e.g., C2) is no greater than 3, 2.5, 2, or 1.8 times the compressive stress at 20 percent compression. In some embodiments, the compressive stress at 60 percent compression is no less than the compressive stress at 20 percent compression. In some embodiments, the compressive stress at 20 percent compression is at least 400 kPa, or at least 500 kPa, or at least 800 kPa, or at least 1 MPa. In some embodiments, a plot of compressive stress on the single layer of the hollow tubes versus percent compression of the single layer of the hollow tubes comprises a first portion 251 extending at least from 20 percent compression to 60 percent compression, where a smallest compressive stress (e.g., C1) in the first portion 251 is at least 500 kPa and a largest compressive stress (e.g., C2) is the first portion 251 is no greater than 2 or 1.8 times the smallest compressive stress in the first portion.

The planar web 100 can be made, for example, via profiled extrusion as generally described in Int. Pat. Appl. Pub. No. WO 2021/250478 (Ausen et al.), for example, or via 3-D printing as generally described in U.S. Pat. No. 5,121,329 (Crump) or Int. Pat. Appl. Nos. WO 2020/044236 (Schädel et al.), WO 2021/033138 (Sahni et al.), or WO 2022/106998 (Schneiderman et al.), for example.

In some embodiments, the walls 111, 112, 121, 122, and 131-134 comprise a polymer. The polymer can be a thermoset or a thermoplastic polymer. In some embodiments, the polymer is an extrudable thermoplastic. Suitable polymers include polyethylene (PP), polypropylene (PE), PP-PE copolymers, polyurethane, and urethane acrylate, for example. In some embodiments, the walls are non-porous (e.g., a non-porous polymer).

Exemplary polymers useful for profiled extrusion, for example, and modulus values for the polymers, are provided in Table 1. Modulus at a specified percent elongation refers to the tensile stress at the specified elongation divided by the elongation.

**Table 1: Properties of extrudable polymers**

| **Abbrev.** | **Name** | **Young's Modulus E (MPa)** | **Modulus @ 100% (MPa)** | **Modulus @ 200% (MPa)** | **Modulus @ 300% (MPa)** |
|---|---|---|---|---|---|
| ELPP | Polypropylene, elastomeric (stereoblock) | 69-359 | | | |
| EPDM | Ethylene-propylene-diene monomer elastomers | 3-7 | | | |
| HDPE | Polyethylene, linear high-density | 60-290 | | | |
| NBR | Acrylonitrile-butadiene elastomers | | 2.9-3.6 | 7.0-8.6 | 10.5-13.0 |
| Nylon 6,6 | Poly(hexamethylene adipamide) | 3300 | | | |
| PC | Polycarbonate | 2380 | | | |
| PDMS | Poly(dimethylsiloxane) | 0.36-0.87 | | | |
| PEBAX | Polyether block amide | 86 | | | |
| PET | Poly(ethylene terephthalate) | 1700 | | | |
| POE | Polyethylene, elastomeric (very highly branched) | 1.5-12.5 | | | |
| SBR | Styrene-butadiene elastomers | 1.4-2.8 | | | |
| SBS | Linear styrene-butadiene-styrene triblock copolymer | | | | 3 |
| SEBS | Linear styrene-(ethylene-butylene)-styrene triblock copolymer | 14-23 | | | 3.8-5.5 |
| THV | Poly(vinylidene fluoride-co-hexafluoropropylene) | | | | 3 |
| TPU | Polyurethane elastomers | 6-2400 | | | |

In some embodiments, the polymer has a Young's modulus E of at least 0.3, 1, 2, 3, 4, 5, 8, or 10 MPa. In some embodiments, the Young's modulus E is no greater than 3500 MPa, 2000 MPa, 1000 MPa, 700, or 500 MPa. For example, in some embodiments, the polymer has a Young's modulus E of at least 3 MPa and no greater than 700 MPa. Typically, a higher Young's modulus allows thinner walls (smaller T) to be used to achieve a desired stress. A Young's modulus E in the range of 3 to 700 MPa and a T/H in a range of 0.02 to 0.25 can result in a useful CFD plateau stress and CFD plateau width while allowing a range of useful extrudable polymers to be used. As described further in the Examples, compressive stresses along the CFD plateau as a function of T/H for interior angles X of 110 and 120 degrees were determined via computer simulation. Results are shown in FIG. 17. The stress determined in the model is proportional to the Young's Modulus E and varies approximately as a power law in T/H. In some embodiments, for a number n of at least 2.5 and no greater than 2.6, E (T/H)^(n) is at least 30, 40, 50, 60, 80, or 100 kPa. For example, for an interior angle X of 120 degrees and a T/H of 0.02, a Young's modulus E of 700 MPa gives E (T/H)^(2.5) of about 40 kPa and results in a plateau stress of about 120 kPa which is useful for some applications, while a Young's modulus E of 100 MPa gives E (T/H)^(2.5) of about 6 kPa and results in a plateau stress of about 17 kPa which is undesirably low for some applications. As another example, for an interior angle X of 110 degrees and a T/H of 0.1, a Young's modulus E of 50 MPa gives E (T/H)^(2.6) of about 126 kPa and results in a plateau stress of about 690 kPa. As still another example, for an interior angle X of 120 degrees and a T/H of 0.25, a Young's modulus E of 3 MPa gives E (T/H)^(2.5) of about 94 kPa and results in a plateau stress of about 280 kPa. The Young's modulus E can be determined according to the ASTM D638-14, for example.

The polymer may be characterized by a hardness of the polymer. In some embodiments, the polymer has a hardness of at least Shore A 75, 80, or 85. The hardness can be up to Shore A 100 or 95, for example, or up to Shore D 70, 60, or 50, for example. Hardness can be measured according to ASTM D2240-15(2021), for example.

The planar web may be characterized by a compression set of the planar web. Compression set measures the amount of permanent deformation remaining after a force is applied and removed and may be expressed as Ct = [(ti - tf)/ti] × 100%, where Ct is the compression set, ti is the initial thickness of the specimen and tf is the final thickness of the specimen after the force has been applied and removed. A low compression set is typically desired. In some embodiments, the planar web has a compression set after 22 hours at 23 degrees C of no greater than 20%, 15%, 10%, 5%, 4%, or 3%. In some embodiments, the planar web has a compression set after 22 hours at 70 degrees C of no greater than 20%, 15%, 10%, or 5%. The compression set can be determined, for example, according to ASTM D3574-17 Test D or a modified ASTM D3574-17 Test D as described in the Examples where an oven temperature of 70 degrees C is used.

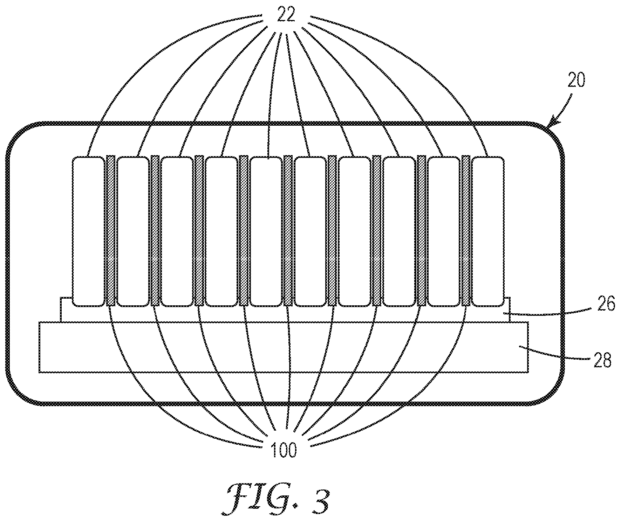

The planar web can be used as a cushioning material in a battery module. FIG. 3 is a schematic side view of a battery module, according to some embodiments. The battery module 20 includes at least one battery cell 22, and at least one planar web 100 disposed along a surface of the at least one battery cell 22. For example, the first or second planar surface 141 or 142 of a planar web 100 can be disposed on a major surface of a battery cell 22. The at least one planar web 100 can include a plurality of the planar web 100. In some embodiments, the at least one battery cell 22 includes a plurality of battery cells arranged in a row with a planar web 100 of the at least one planar web disposed between each pair of adjacent battery cells 22. The battery module 20 can optionally further include a planar web 100 disposed between a battery cell at one or both ends of the row of battery cells and a case of the battery module 20. Additional planar webs 100 can optionally be disposed along tops and/or bottoms of the battery cells 22. **In** some embodiments, the at least one battery cell 22 is disposed on a cooling plate 26 disposed on a tray 28. Related battery modules are described in Int. Appl. Publ. No. WO 2022/024085 (Wu et al.), for example.

### EXAMPLES

### Materials

**Table 2: Summary of materials used in the preparation of the examples.**

| Name | Description | Tradename and Source |
|---|---|---|
| TPU 92A | Thermoplastic polyurethane (TPU) having a specified hardness of 92A, a modulus at 100% elongation of 6.9-7.6 MPa | Available from STRATASYS, Ltd., Eden Prairie, MN under the tradename FDM TPU 92A |
| TPU 95A | Thermoplastic polyurethane (TPU) having a specified hardness of 95A and a modulus at 55% elongation of 9 MPa | Available from NINJATEK, Manheim, PA under the tradename CHEETAH 95A |
| UA 80A | Urethane Acrylate (UA) having a specified hardness of 80A | Available from FORMLABS, Somerville, WA under the tradename Flexible 80A |
| PP-PE 7810 | Polypropylene (PP) - polyethylene (PE) copolymer | Available from EXXONMOBIL Chemical Company, Houston, TX under the tradename VISTAMAXX 7810 |
| PP-PE 8880 | Polypropylene (PP) - polyethylene (PE) copolymer | Available from EXXONMOBIL Chemical Company, Houston, TX under the tradename VISTAMAXX 8880 |
| PE 5230G | Polyethylene (PE) | Available from DOW Chemical Company, Midland, MI under the tradename ELITE 5230 G |
| PU Foam | Polyurethane (PU) foam | Available from Aearo Technologies LLC, Indianapolis, IN under the tradename ISOLOSS AG-160 |

### Test methods used

### Compression Test Method

Mechanical properties of the specimens were measured in compression using an Instron Mechanical Testing system model #5969. Custom made steel compression plates were used having a 40 mm diameter. Compression was tested using a modified ASTM D3574-17 test standard. The compression rate was 5 mm/min and specimens were compressed down to 70% compression strain. After every cycle, the thickness was adjusted to accommodate any permanent degradation occurring upon compression. The compression test was performed using a 50 kN load cell. Samples were cut into 2.5 mm squares for testing and a total of 5 compression cycles were done for each test. The third compression cycle data was used in order to remove or minimize Mullin's effect.

### Compression Set Test Method

A compression set of the specimen was measured according to a modified ASTM D3574-17 Test D test standard. A specimen with a fixed width, height, and thickness was installed on a compression device and was compressed to 50% of its original thickness. Within 15 min, the compression device containing the deflected specimens was placed into the mechanically convected air oven at 70 degrees C for a period of 22 h. After 22 h, the compression device was removed from the oven and the specimen was immediately removed from the compression device. The specimen was allowed to recover for 30 to 40 min at room temperature, and then the thickness of the specimen was measured. The compression set was determined according to Ct = [(ti - tf)/ti] × 100%, where Ct is the compression set expressed as a percentage of the initial thickness, ti, of the specimen and tf is the final thickness of the specimen.

Sample planar webs were made by 3-D printing using the materials in Table 3 to produce hollow octagonal tubes with the geometry indicated in the table. The octagon geometry was generally as schematically illustrated in FIG. 1 with a C/A approximately (e.g., within 20%) 1 and B/A approximately 0.5. The printing methods used were Fused Deposition Modeling (FDM), which is also known as Fused Filament Fabrication (FFF), for TPU 92A and TPU 95A, and stereolithography (SLA) for UA 80A. The FDM method that was used is generally described in Int. Pat. Appl. No. WO 2020/044236 (Schädel et al.) - see, e.g., p. 12, line 20 to p. 13, line 27. The SLA method that was used is generally described in Int. Pat. Appl. No. WO 2022/106998 (Schneiderman et al.) - see, e.g., the section starting on p. 27, line 30.

**Table 3: Materials and geometry for Examples 1-20**

| **Example** | **Material** | **Height H (mm)** | **Wall Thickness T (mm)** | **T/H** | **Angle X (degrees)** |
|---|---|---|---|---|---|
| 1 | TPU 92A | 8.05 | 1.11 | 0.14 | 113 |
| 2 | TPU 92A | 11.9 | 1.70 | 0.14 | 114 |
| 3 | TPU 92A | 7.69 | 0.75 | 0.10 | 113 |
| 4 | TPU 92A | 11.86 | 1.20 | 0.10 | 115 |
| 5 | TPU 95A | 7.78 | 1.10 | 0.14 | 112 |
| 6 | TPU 95A | 7.23 | 1.07 | 0.15 | 125 |
| 7 | TPU 95A | 11.63 | 1.63 | 0.14 | 111 |
| 8 | TPU 95A | 11.12 | 1.50 | 0.13 | 123 |
| 9 | TPU 95A | 7.76 | 0.78 | 0.10 | 111 |
| 10 | TPU 95A | 7.13 | 0.69 | 0.10 | 127 |
| 11 | TPU 95A | 11.63 | 1.10 | 0.09 | 112 |
| 12 | TPU 95A | 11.24 | 1.01 | 0.09 | 127 |
| 13 | UA 80A | 3.81 | *0.55* | 0.14 | 117 |
| 14 | UA 80A | 3.74 | 0.53 | 0.14 | 124 |
| 15 | UA 80A | 8.21 | 0.99 | 0.12 | 113 |
| 16 | UA 80A | 7.96 | 1.07 | 0.13 | 124 |
| 17 | UA 80A | 3.68 | 0.32 | 0.09 | 117 |
| 18 | UA 80A | 3.72 | 0.33 | 0.09 | 124 |
| 19 | UA 80A | 8.27 | 0.59 | 0.07 | 118 |
| 20 | UA 80A | 8.50 | 0.64 | 0.08 | 127 |

Compressive stress versus percent compression of the planar web was measured as described in "Compression Test Method". Results are reported in the Table 4 for 20% and 60% compression.

**Table 4: Results for Examples 1-20**

| **Example** | **Stress @ 20%** | **Stress @ 60%** | **Stress Ratio** |
|---|---|---|---|
| 1 | 401 | 594 | 1.48 |
| 2 | 306 | 525 | 1.72 |
| 3 | 318 | 444 | 1.40 |
| 4 | 209 | 329 | 1.57 |
| 5 | 589 | 911 | 1.55 |
| 6 | 287 | 499 | 1.74 |
| 7 | 404 | 661 | 1.64 |
| 8 | 257 | 452 | 1.76 |
| 9 | 191 | 408 | 2.14 |
| 10 | 75 | 168 | 2.24 |
| 11 | 137 | 262 | 1.91 |
| 12 | 81 | 150 | 1.85 |
| 13 | 308 | 875 | 2.84 |
| 14 | 157 | 333 | 2.12 |
| 15 | 277 | 673 | 2.43 |
| 16 | 68 | 104 | 1.53 |
| 17 | 94 | 100 | 1.06 |
| 18 | 51 | 64 | 1.25 |
| 19 | 73 | 194 | 2.66 |
| 20 | 37 | 54 | 1.46 |

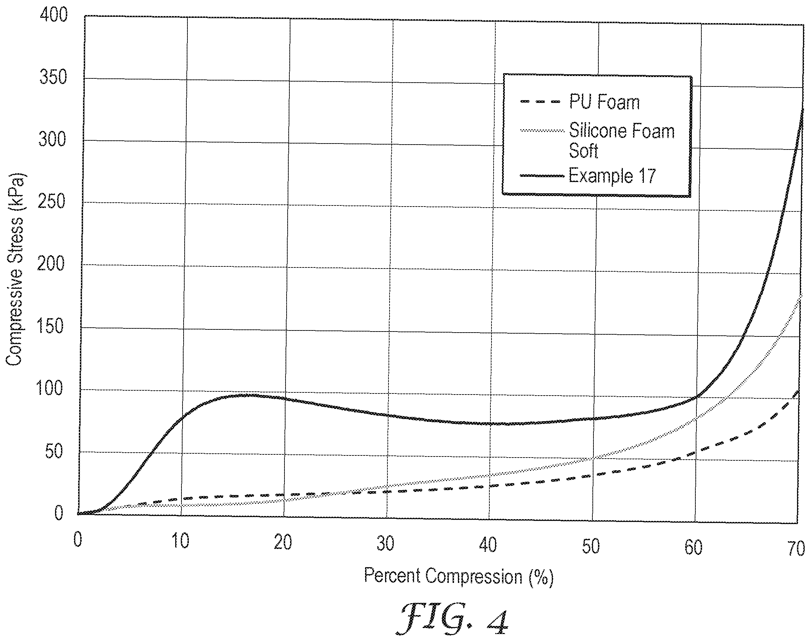

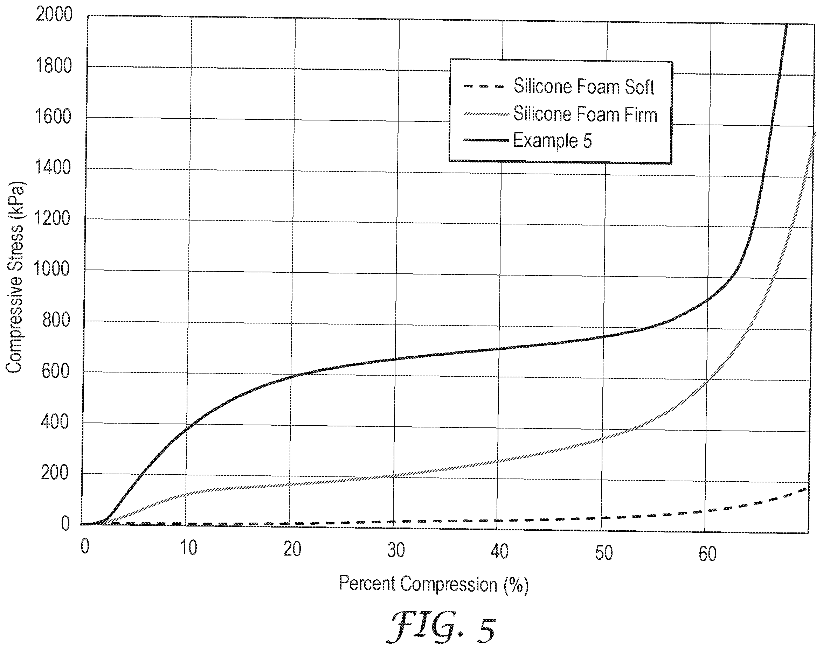

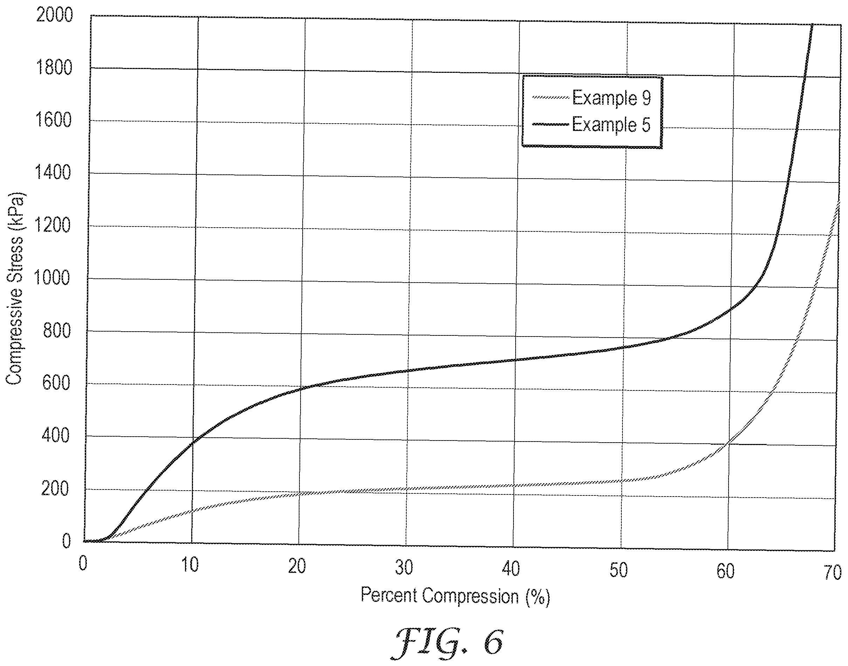

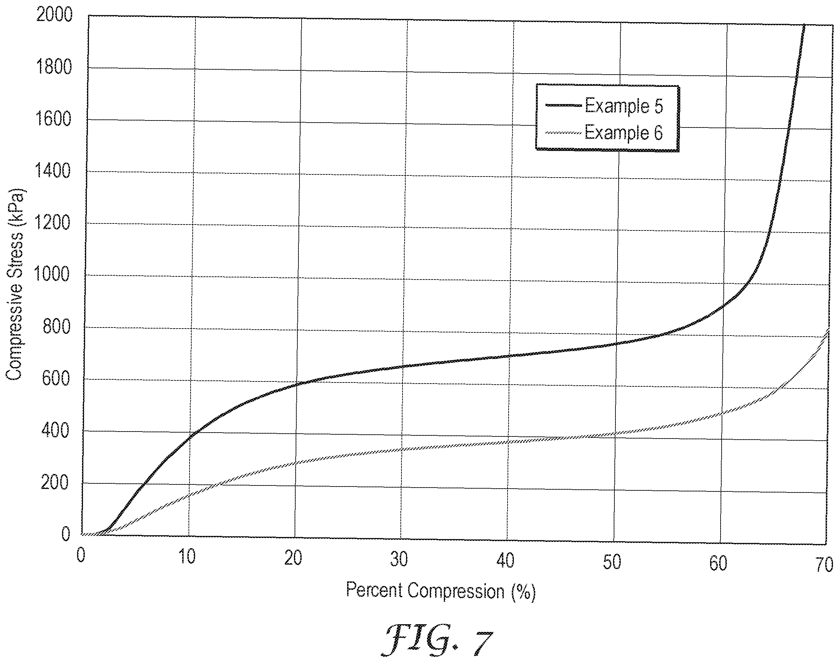

FIGS. 4-5 are plots of compressive stress versus percent compression for Examples 17 and 5, respectively. For comparison, results are shown for PU Foam and for soft and firm silicone foam samples in the plots. The soft and firm silicone foams were made as generally described in Int. Pat. Appl. No. WO 2021/176372 (Kempf et al.). FIG. 6 is a plot of compressive stress versus percent compression for Examples 9 and 5. FIG. 7 is a plot of compressive stress versus percent compression for Examples 5 and 6, respectively.

Compression set was measured for various samples as described under "Compression Set Test Method". Results are provided in Table 5.

**Table 5: Compression set data**

| **Example** | **Initial Thickness, ti (mm)** | **Final Thickness, tf (mm)** | **Compression Set, Ct (%)** |
|---|---|---|---|
| 3 | 8.18 | 6.99 | 15 |
| 9 | 9.15 | 7.67 | 16 |

A blend of 90/10 PP-PE 7810/8880 was used to make an octagonal shape continuous web via profiled extrusion as generally described in Int. Pat. Appl. Pub. No. WO 2021/250478 (Ausen et al.) except that the extrusion die was configured to extrude octagonal shapes. The extruded sample had a wall thickness of 0.24 mm and a height of 2.44 mm, which led to a T/H ratio of 0.098. The intemal angle X of the octagons was 150 degrees. This sample is provided for comparison and lies outside the range of 100 degrees to 140 degrees for X. The octagons had a C/A of approximately 1 and a B/A of approximately 0.5. As described elsewhere herein, the internal angle X can be reduced to increase the compressive stress along the plateau of the CFD curve (see, e.g., FIG. 11). For comparison, a sample was made by profile extruding a squircle web as generally described in Int. Pat. Appl. Pub. No. WO 2021/250478 (Ausen et al.). A nonlinear compression curve was observed with a similar sample height of 1.88 mm. The squircle sample was made using PE 5230G. While the material choice can affect the absolute value of the CFD curve, it is believed to have little effect on the shape of the curve. Results are shown in FIGS. 8-9 for the octagonal squircle webs, respectively. Curves are shown for 5 compression cycles. For FIG. 8, the curves for the second to fifth cycle are almost on top of each other. For FIG. 9, the compression portion of the curves for the squircle web drops with each cycle.

Computer simulations were carried out to determine compressive stress versus percent compression for various planar webs. The modeling was performed for octagons and hexagons joined along the sides. In the model, the material was modeled as linear elastic with a 1 GPa Young's Modulus and a 0.45 Poisson ratio. These values are in ranges appropriate for thermoplastic polyurethanes, for example. The octagons were modeled as having T=0.3mm, H=2.0mm, X=110 deg, A=C=1mm, and B=0.5mm. The hexagons were modeled has having the same wall thickness and total height as the octagons and were modeled as having sides of length (A and B) 1 mm an internal angle of 120 degrees. The planar web, which consisted of many repeating patterns, undergoing compression was modeled as a three-pattern unit compressed between two flat rigid plates. These flat rigid plates can represent models of the battery surfaces adjoining the planar web. As the thickness of the web is much smaller than other dimensions, the three-pattern unit was modeled using shell finite elements representing the mid-surface of the web. For the purposes of the model, the quantities T, H, X, A, B, and C were measured along the mid-surface (centerline) of the walls of the octagonal shapes and so differ slightly from the corresponding values when measured from the outer surfaces as schematically illustrated in FIG. 1. The depth of the pattern was taken to five times the edge length (A). The simulations were performed with LS-DYNA software, which is a general-purpose explicit dynamics finite element solver commercially available from ANSYS (Canonsburg, PA). Results are shown in FIG. 10. The resulting compressive stress scales with the Young's modulus E in the model. Accordingly, the stress in FIG. 10 and in other figures showing stress determined from the modeling are normalized by the Young's modulus E.

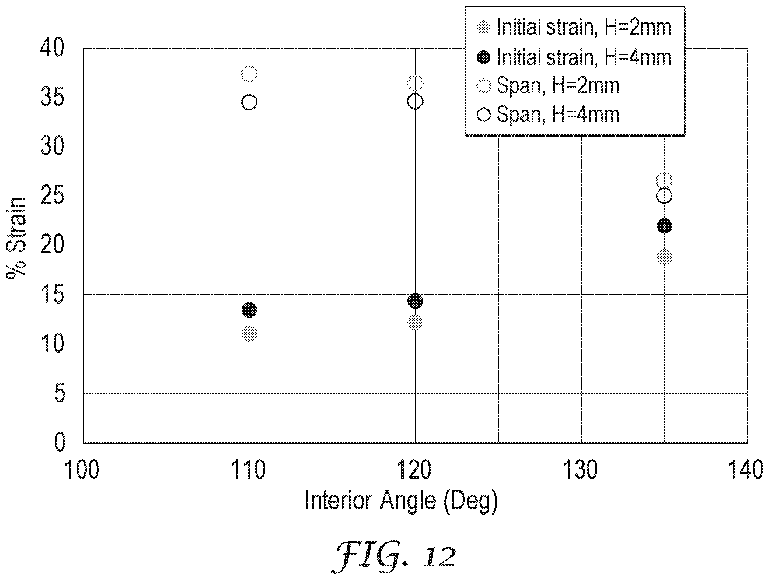

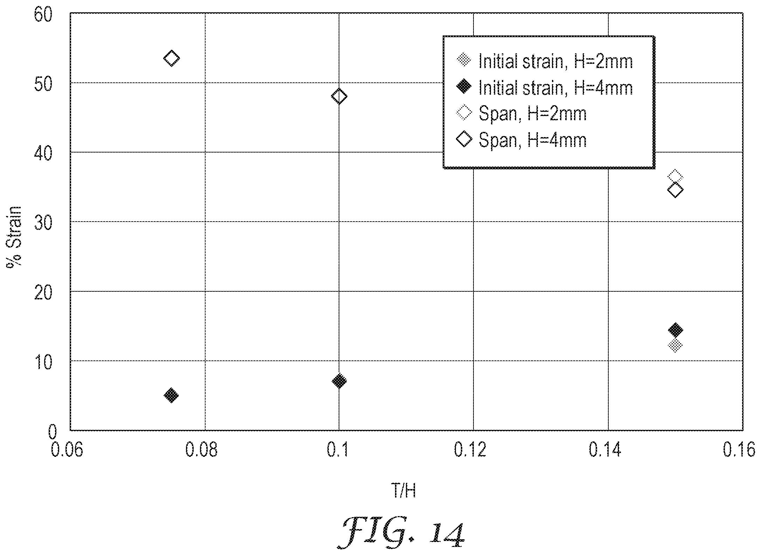

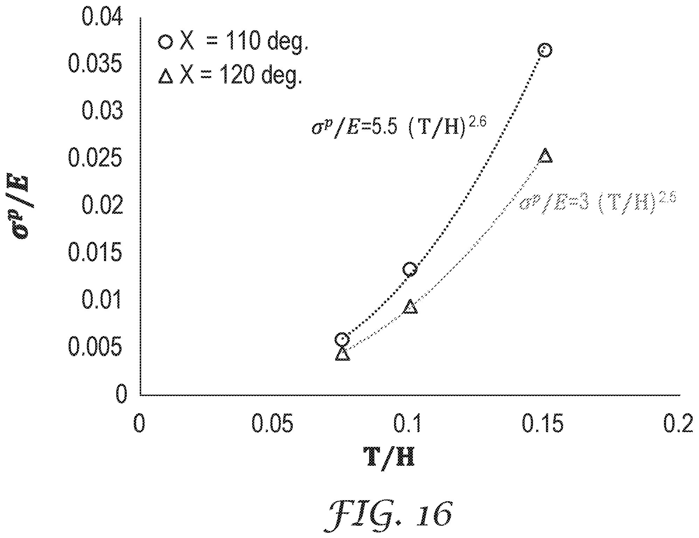

The simulation was carried out for octagons joined along the sides for T/H values of 0.075, 0.1, and 0.15; X values of 110, 120, 135, and, for comparison, 150 degrees (outside the range of 100 degrees to 140 degrees for X); B/A values of 0.5 and 0.75; and a C/A value of 1. Results are shown in FIGS. 11-16. FIG. 11 is a plot of compressive stress versus compressive strain for various interior angles X and for T/H of 0.15 and B/A of 0.5. FIG. 12 is a plot of initial compressive strain along a stress-strain plateau and span of the plateau as a function of the interior angle X. FIG. 13 is a plot of compressive stress versus compressive strain for various interior angles X and various T/H values. FIG. 14 is a plot of initial compressive strain along a stress-strain plateau and span of the plateau as a function of T/H. In FIGS. 13-14, B/A was 0.5. Results are shown in FIG. 13 for values of the height H of 2 (grey curves) and 4 (black curves) mm. FIG. 15 is a plot of compressive stress versus compressive strain for various values of the interior angle X and B/A with T/H held at 0.15. FIG. 16 is a plot of a ratio of compressive stress p along the CFD plateau to Young's modulus E versus T/H illustrating how the compressive stress in the model scales with Young's modulus E and T/H for interior angles X of 110 degrees and 120 degrees.

Various modifications and alterations of this invention will become apparent to those skilled in the art without departing from the scope of this invention

## Claims

1. A planar web comprising a plurality of hollow tubes, wherein each hollow tube has an octagonal cross section comprising eight walls, wherein the eight walls comprise:
a first surface wall and a second surface wall, each surface wall having a length A, two side walls perpendicular to the surface walls, each side wall having a length B, and four connecting walls, wherein each connecting wall independently connects one of the surface walls to one of the side walls such that the interior angle between the one of the surface walls and the connecting wall is X;
wherein each wall has a thickness T and each hollow tube has a height H measured from the first surface wall to the second surface wall;
wherein adjacent side walls of adjacent hollow tubes are bonded together to form the planar web having a first planar surface comprising the first surface walls and a second planar surface comprising the second surface walls; and
wherein: B/A is at least 0.2 and no greater than 1; T/H is at least 0.02 and no greater than 0.25; and X is at least 100 degrees and no greater than 140 degrees.

2. The planar web of claim 1, wherein T/H is at least 0.08 and no greater than 0.2, X is at least 105 degrees and no greater than 130 degrees, and B/A is at least 0.4 and no greater than 0.8.

3. The planar web of claims 1 or 2, wherein each of the four connecting walls has a length C, C/A being at least 0.8 and no more than 1.2.

4. The planar web of any one of claims 1 to 3, wherein the walls are non-porous.

5. The planar web of any one of claims 1 to 4, wherein the walls comprise a polymer.

6. The planar web of claim 5, wherein the planar web has a compression set after 22 hours at 23 degrees C of no greater than 20%, as measured according to the method described herein.

7. The planar web of claim 5 or 6, wherein the polymer has a Young's modulus E of at least 3 MPa and no greater than 700 MPa.

8. The planar web of claim 7, wherein for a number n of at least 2.5 and no greater than 2.6, E (T/H)^(n) is at least 30 kPa.

9. The planar web of any one of claims 1 to 8, wherein the planar web comprises a single layer of the hollow tubes comprising the first and second planar surfaces; and wherein for the single layer of the hollow tubes, a compressive stress at 20 percent compression is at least 300 kPa and a compressive stress at 60 percent compression is no greater than 3 times the compressive stress at 20 percent compression, as measured according to the method described herein.

10. The planar web of claim 9, wherein a plot of compressive stress on the single layer of the hollow tubes versus percent compression of the single layer of the hollow tubes comprises a first portion extending at least from 20 percent compression to 60 percent compression, a smallest compressive stress in the first portion being at least 500 kPa, a largest compressive stress in the first portion being no greater than 2 times the smallest compressive stress in the first portion.

11. A battery module comprising:
at least one battery cell; at least one planar web according to any one of claims 1 to 10 disposed along a surface of the at least one battery cell.

## Patentansprüche

1. Eine planare Bahn, aufweisend eine Mehrzahl von Hohlrohren, wobei jedes Hohlrohr einen achteckigen Querschnitt hat, aufweisend acht Wände, wobei die acht Wände aufweisen:
eine erste Oberflächenwand und eine zweite Oberflächenwand, wobei jede Oberflächenwand eine Länge A hat, zwei Seitenwände senkrecht zu den Oberflächenwänden, wobei jede Seitenwand eine Länge B hat, und vier Verbindungswände, wobei jede Verbindungswand unabhängig voneinander eine der Oberflächenwände mit einer der Seitenwände verbindet, sodass der Innenwinkel zwischen der einen der Oberflächenwände und der Verbindungswand X beträgt;
wobei jede Wand eine Dicke T hat und jedes Hohlrohr eine Höhe H hat, die von der ersten Oberflächenwand zu der zweiten Oberflächenwand gemessen wird;
wobei angrenzende Seitenwände von angrenzenden Hohlrohren aneinander gebunden sind, um die planare Bahn zu bilden, die eine erste planare Oberfläche, aufweisend die ersten Oberflächenwände, und eine zweite planare Oberfläche, aufweisend die zweiten Oberflächenwände, hat; und
wobei: B/A mindestens 0,2 und nicht größer als 1 ist; T/H mindestens 0,02 und nicht größer als 0,25 ist; und X mindestens 100 Grad und nicht größer als 140 Grad ist.

2. Die planare Bahn nach Anspruch 1, wobei T/H mindestens 0,08 und nicht größer als 0,2 ist, X mindestens 105 Grad und nicht größer als 130 Grad ist und B/A mindestens 0,4 und nicht größer als 0,8 ist.

3. Die planare Bahn nach Anspruch 1 oder 2, wobei jede der vier Verbindungswände eine Länge C hat, wobei C/A mindestens 0,8 und nicht größer als 1,2 ist.

4. Die planare Bahn nach einem der Ansprüche 1 bis 3, wobei die Wände nichtporös sind.

5. Die planare Bahn nach einem der Ansprüche 1 bis 4, wobei die Wände ein Polymer aufweisen.

6. Die planare Bahn nach Anspruch 5, wobei die planare Bahn einen Druckverformungsrest nach 22 Stunden bei 23 Grad C von nicht größer als 20 % hat, gemessen gemäß dem hierin beschriebenen Verfahren.

7. Die planare Bahn nach Anspruch 5 oder 6, wobei das Polymer einen Elastizitätsmodul E von mindestens 3 MPa und nicht größer als 700 MPa hat.

8. Die planare Bahn nach Anspruch 7, wobei, für eine Zahl n von mindestens 2,5 und nicht größer als 2,6, E (T/H)^(n) mindestens 30 kPa beträgt.

9. Die planare Bahn nach einem der Ansprüche 1 bis 8, wobei die planare Bahn eine einzige Schicht von Hohlrohren, aufweisend die erste und die zweite planare Oberfläche, aufweist; und wobei, für die einzelne Schicht der Hohlrohre, eine Druckspannung bei 20 Prozent Druck mindestens 300 kPa ist und eine Druckspannung bei 60 Prozent Druck nicht größer als ein 3-Faches der Druckspannung bei 20 Prozent Druck ist, wie gemäß dem hierin beschriebenen Verfahren gemessen.

10. Die planare Bahn nach Anspruch 9, wobei eine grafische Darstellung der Druckspannung auf der einzelnen Schicht der Hohlrohre gegenüber einem prozentualen Druck der einzelnen Schicht der Hohlrohre einen ersten Abschnitt, der sich mindestens von 20 Prozent Druck bis 60 Prozent Druck erstreckt, aufweist, wobei eine kleinste Druckspannung in dem ersten Abschnitt mindestens 500 kPa ist, wobei eine größte Druckspannung in dem ersten Abschnitt nicht größer als ein 2-Faches der kleinsten Druckspannung in dem ersten Abschnitt ist.

11. Ein Batteriemodul, umfassend:
mindestens eine Batteriezelle; mindestens eine planare Bahn nach einem der Ansprüche 1 bis 10, die entlang einer Oberfläche der mindestens einen Batteriezelle angeordnet ist.

## Revendications

1. Bande plane comprenant une pluralité de tubes creux, dans laquelle chaque tube creux a une section transversale octogonale comprenant huit parois, dans laquelle les huit parois comprennent :
une première paroi de surface et une seconde paroi de surface, chaque paroi de surface ayant une longueur A, deux parois latérales perpendiculaires aux parois de surface, chaque paroi latérale ayant une longueur B, et quatre parois de liaison, dans laquelle chaque paroi de liaison relie indépendamment une des parois de surface à l'une des parois latérales de telle sorte que l'angle intérieur entre l'une des parois de surface et la paroi de liaison est X ;
dans laquelle chaque paroi a une épaisseur T et chaque tube creux a une hauteur H mesurée de la première paroi de surface à la seconde paroi de surface ;
dans laquelle des parois latérales adjacentes de tubes creux adjacents sont collées ensemble pour former la bande plane ayant une première surface plane comprenant les premières parois de surface et une seconde surface plane comprenant les secondes parois de surface ; et
dans laquelle : B/A est d'au moins 0,2 et pas plus de 1 ; T/H est d'au moins 0,02 et d'au plus 0,25 ; et X est d'au moins 100 degrés et pas plus de 140 degrés.

2. Bande plane selon la revendication 1, dans laquelle T/H est d'au moins 0,08 et ne dépasse pas 0,2, X est d'au moins 105 degrés et ne dépasse pas 130 degrés, et B/A est d'au moins 0,4 et d'au plus 0,8.

3. Bande plane selon les revendications 1 ou 2, dans laquelle chacune des quatre parois de liaison a une longueur C, C/A étant d'au moins 0,8 et pas plus de 1,2.

4. Bande plane selon l'une quelconque des revendications 1 à 3, dans laquelle les parois sont non poreuses.

5. Bande plane selon l'une quelconque des revendications 1 à 4, dans laquelle les parois comprennent un polymère.

6. Bande plane selon la revendication 5, dans laquelle la bande plane a un ensemble de compression après 22 heures à 23 degrés C ne dépassant pas 20 %, telle que mesurée selon le procédé décrit ici.

7. Bande plane selon la revendication 5 ou 6, dans laquelle le polymère a un module de Young E d'au moins 3 MPa et d'au plus 700 MPa.

8. Bande plane selon la revendication 7, dans laquelle pour un nombre n d'au moins 2,5 et d'au plus 2,6, E (T/H)^(n) est d'au moins 30 kPa.

9. Bande plane selon l'une quelconque des revendications 1 à 8, dans laquelle la bande plane comprend une seule couche des tubes creux comprenant les première et seconde surfaces planes ; et dans laquelle, pour la couche unique des tubes creux, une contrainte de compression à 20 pour cent de compression est d'au moins 300 kPa et une contrainte de compression à 60 pour cent de compression n'est pas supérieure à 3 fois la contrainte de compression à 20 pour cent de compression, telle que mesurée selon le procédé décrit ici.

10. Bande plane selon la revendication 9, dans laquelle un tracé de la contrainte de compression sur la couche unique des tubes creux en fonction du pourcentage de compression de la couche unique des tubes creux comprend une première partie s'étendant au moins de 20 pour cent de compression à 60 pour cent de compression, une plus petite contrainte de compression dans la première partie étant d'au moins 500 kPa, une contrainte de compression la plus importante dans la première partie n'étant pas supérieure à 2 fois la contrainte de compression la plus petite dans la première partie.

11. Module de batterie comprenant :
au moins un élément de batterie ; au moins une bande plane selon l'une quelconque des revendications 1 à 10 disposée le long d'une surface de l'au moins un élément de batterie.
